# EUROPÄISCHE PATENTSCHRIFT

(11) **EP 0 997 736 B1**
(45) Veröffentlichungstag und Bekanntmachung des Hinweises auf die Patenterteilung: **26.11.2003**
(21) Anmeldenummer: 99119605.6
(22) Anmeldetag: 02.10.1999
(51) Int. Cl.: G01P 13/04, H02P 3/12

(54) **Verfahren zur Erkennung der Bewegung, Bewegungsrichtung und der Position eines mittels eines elektrischen Motors bewegbaren Teils sowie geeignete Schaltungsanordnung**
Method for detecting the movement, direction of movement and position of a moving part driven by an electrical motor, and suitable circuit
Procédé de détection du mouvement, de la direction de mouvement et de la position d'une pièce mouvable par un moteur électrique, ainsi que circuit approprié

(30) Priorität: 27.10.1998 DE 19849430; 04.12.1998 DE 19855996
(43) Veröffentlichungstag der Anmeldung: 03.05.2000
(73) Patentinhaber: Conti Temic microelectronic GmbH, 90411 Nürnberg (DE)
(72) Erfinder: Käufl, Georg, 93351 Maierhofen (DE); Kessler, Erwin, 88348 Saulgau (DE); Liepold, Erich, 85092 Kösching (DE); Pollersbeck, Werner, 85104 Pförring (DE); Rödel, Reinhold, 93333 Neustadt (DE); Schulter, Wolfgang, 88709 Meersburg (DE); Spreng, Klaus, 85055 Ingolstadt (DE)

(56) Entgegenhaltungen:
- US-A- 4 319 170
- US-A- 5 780 988
- PATENT ABSTRACTS OF JAPAN vol. 1995, no. 11, 26. Dezember 1995 (1995-12-26) & JP 07 222477 A (MATSUSHITA ELECTRIC IND CO LTD), 18. August 1995 (1995-08-18)

## Beschreibung

Die Erfindung betrifft ein Verfahren zur Erkennung der Bewegung, Bewegungsrichtung und der Position eines mittels eines elektrischen Motors bewegbaren Teils, das insbesondere bei der fremdkraftbetätigten Verstellung von Schließteilen in Kraftfahrzeugen, z.B. bei einem elektrisch angetriebenen Fensterheber mit Einklemmschutz angewendet werden kann. Außerdem betrifft die Erfindung eine zur Durchführung dieses Verfahrens geeignete Schaltungsanordnung.

Eine Gruppe bekannter Vorrichtungen zur Positions- und Drehrichtungserkennung verwendet 2-kanalige Sensorsysteme, deren Signale phasenverschoben sind und in einer Elektronikeinheit ausgewertet werden. Die verwendeten Sensoren können nach sehr unterschiedlichen physikalischen Prinzipien (z.B.: elektrisch, magnetisch, induktiv, optisch) arbeiten.

So verwendet der elektromotorische Antrieb gemäß der EP 0 359 853 A1 beispielsweise zwei zueinander winkelversetzte Hall-Sensoren, die einem auf der Ankerwelle befestigten Ringmagneten zugeordnet sind. Bei Drehung der Ankerwelle entstehen zwei entsprechend phasenverschobene, vom Hall-Sensor generierte Signale, die nach Digitalisierung in einer Elektronikeinheit ausgewertet werden und die ausschließliche Grundlage für die Drehrichtungserkennung bilden. Da das entsprechende Signalmuster für jede Drehrichtung charakteristisch (verschieden) ist, lassen sich die Zählimpulse ebenso eindeutig einer Drehrichtung zuordnen.

Da die bekannte technische Lösung jedoch nicht mit weniger als zwei Sensorkanälen auskommt, ist sie nur mit einem entsprechend hohen Aufwand an Bauteilen und Leitungen zu realisieren. Auch der dafür freizuhaltende Bauraum kann sich negativ auswirken und zwar insbesondere bei Verwendung kleiner Antriebseinheiten mit integrierter Elektronik. Bei Verwendung nur eines solchen Sensors liegt nur ein zu der Anzahl der erfolgenden Umdrehungen des Motors proportionales Signal vor, welches dann entsprechend der Polung der Motorantriebsspannung einer Bewegungsrichtung des zu bewegenden Teils zugeordnet und entsprechend zur bisherigen Position addiert oder subtrahiert werden muß. Nach dem Abschalten der Motorantriebsspannung auftretende Signalflanken können nicht zugeordnet werden.

Aus JP 63-30 43 07 A ist eine Geschwindigkeitssteuerung für einen motorischen Antrieb bekannt, bei der kontinuierlich die Phasendifferenz zwischen einem betreffenden Geschwindigkeitssteuerungsimpuls und dem Erhöhungsimpuls einer Laserlängenmeßvorrichtung erfaßt wird. Der verwendete Steuerkreis weist außerdem einen Pulswandler und einen Mechanismus zur Umwandlung der Drehbewegung des Motors in eine Linearbewegung auf. Aus der Messung der linearen Bewegung wird in einem Wandler ein up- bzw. down-Signal generiert, und zwar in Abhängigkeit von der Richtung des Stellbefehls.

Die beschriebene Lösung erlaubt zwar eine sehr genaue Steuerung der Verstellgeschwindigkeit eines Objekts, sie ist jedoch nicht geeignet, gleichzeitig auch seine Position festzustellen. Dazu sind weitere Maßnahmen vorzusehen.

Aus der DE 43 15 637 C2 ist des weiteren ein Verfahren zur Erkennung der Position und Bewegungsrichtung bekannt, bei dem neben den Signalflanken des digitalisierten Sensorsignals der Zustand des Antriebes berücksichtigt wird, indem im Falle der Umkehr der Bewegungsrichtung die Signalflanken in Abhängigkeit von einer durch feste prinzipiell empirisch zu ermittelnde oder mathematisch zu berechnende Zeitschwellen begrenzten Nachlaufzeit zugeordnet werden. Eine Anpassung an die sich in starkem Maße ändernden Systembedingungen ist nicht möglich, da der zeitliche Verlauf des Motorstroms bei einer Bewegungsrichtungsumkehr um mehrere Größenordnungen variiert. So ist insbesondere eine Steuerung mit festen Schwellen immer nur auf einen bestimmten Lastfall, maßgeblich bestimmt durch das zu überwindende äußere Moment, begrenzt. Eine sich beispielsweise durch das Einfrieren oder Klemmen einer Fensterscheibe ergebende Erhöhung führt jedoch zu Abweichungen. In Kraftfahrzeugen kann die Betriebsversorgungsspannung durchaus erheblich absinken, wenn einerseits die Batterie leer ist und zusätzlich noch andere Lastelemente betrieben werden. Wird der Motor, wie bspw. bei Stellantrieben industrieller Werkzeugmaschinen, sehr häufig benutzt, so verändern sich auch die elektrischen Parameter des Motors aufgrund der Erwärmung. Würde man die Zeitschwellen so weit auseinander legen, daß alle diese Fälle noch davon erfaßt werden, so wird eine besonders leichtgängige Stellanordnung bereits mehrere Umdrehungen in die entgegengesetzte Richtung ausführen, ehe dies durch die Schwelle erkannt wird.

Aus der EP 0 603 506 A2 ist ein Verfahren zur Lagebestimmung eines elektromotorisch in zwei Richtungen angetriebenen Teils von Kraftfahrzeugen mit einem Stellungsgeber zu entnehmen, bei dem ein Richtungswechsel in Abhängigkeit von der Dauer einer Pause zwischen zwei Impulsen des Stellungsgebers erkannt werden soll. Durch schnelle Richtungswechsel oder ein ungleichmäßiges und nicht in einem Schritt erfolgendes, stufenförmiges Bewegen des Teils kann es bei einem solchen Verfahren zu Fehlern kommen.

Aus der am 29.10.98 veröffentlichten DE 197 33 581 C1 der Anmelderin ist darüber hinaus ebenfalls ein gattungsgemäßes Verfahren zu entnehmen, bei dem spätestens mit dem Ansteuern der Schaltmittel zum Umschalten der Motorspannung von einer Bewegungsrichtung in die entgegengesetzte mittels einer Meßanordnung der Motorstrom erfaßt wird. Der Motorstrom zeigt bei der Umpolung der äußeren Motorantriebsspannung einen charakteristischen Verlauf bedingt durch das Nachlaufen aufgrund der Masseträgheit des Motors und des damit bewegten Teiles, bspw. der Fensterscheibe. Gegen diese Bewegungsrichtungsumkehr wird eine Spannung induziert, die sich mit der äußeren Motorantriebsspannung überlagert und den charakteristischen Verlauf des Motorstroms bewirkt, aus dem der tatsächliche Zeitpunkt der Richtungsumkehr, der deutlich nach dem Zeitpunkt der Umschaltung der Motorantriebsspannung liegt, abgeleitet wird. Die Signalflanken des Sensorsignals werden von der Auswertung entsprechend der tatsächlichen Bewegungsrichtung zur aktuellen Position addiert bzw. subtrahiert. Dieses elektromechanische Verhalten von Gleichstrommotoren wird mittels sogenannter Motorengleichungen beschrieben.

In Versuchsreihen wurde jedoch festgestellt, daß dennoch aufgrund anderer Effekte weiterhin nicht vernachlässigbare Abweichungen in der Positionsbestimmung auftreten, die sich über die Lebensdauer eines Fahrzeuges hinweg summieren.

Als wesentliche Ursache für diese weiterhin aufgetretenen Abweichungen bei der Positionsbestimmung wurde ermittelt, daß auch nach dem Abschalten der Motorantriebsspannung Signalflanken auftreten, insbesondere beim Anhalten des Motors ein bisher vernachlässigtes Nachlaufen auftritt, welches jedoch durchaus eine Dauer von einigen Umdrehungen des Motors hat und damit einige Signalflanken nicht oder fehlerhaft ausgewertet werden. Dieser Fehler gleicht sich auch nicht immer durch einen entsprechenden Nachlauf in entgegengesetzter Bewegungsrichtung aus.

Wie in der gattungsbildenden JP 07222477 A, offengelegt am 18.08.95 bereits erkannt wurde, führt jede dieser Bewegungsänderungen des Motors zu einer Spannungsinduktion nach dem Generatorprinzip. Da diese Abweichungen jedoch auftreten, während der Motor von der äußeren Motorantriebsspannung bereits getrennt ist, kann diese Generatorspannung erfaßt und eine Zuordnung der Signalflanken zu der tatsächlichen Bewegungsrichtung ermöglicht werden.

Für eine Reihe von Anwendungen ist es jedoch erforderlich, den Motor möglichst schnell zum Stillstand zu bringen. Dies erfolgt dabei üblicherweise durch einen Kurzschluß der Wicklungsanschlüsse des Motors. Eine entsprechende Schaltungsanordnung zur Abbremsung ist beispielsweise der US 4,319,170 zu entnehmen. Die Bewegungsrichtung des Motors wird dabei jedoch nicht erfasst.

Wie der JP 07222477 A zu entnehmen ist, kann aber die Generatorspannung während des Kurzschlusses nicht mehr erfasst werden. Die Schrift schlägt aus diesem Grunde vor, die den Motor kurzschliessenden Schalter wieder zu öffnen und in dieser Leerlaufphase die Generatorspannung zu erfassen und auszuwerten. Eine solche zeitweise Erfassung der Generatorspannung erfordert einen deutlich erhöhten Steuerungsaufwand und verzögert die Abbremsung des Motors. Außerdem führt auch dieses Verfahren weiterhin zu Abweichungen aufgrund fehlerhaft zugeordneter Signalflanken.

Aufgabe der Erfindung ist es daher, ein demgegenüber weiter verbessertes und zudem einfacheres Verfahren sowie eine dafür geeignete Schaltungsanordnung vorzustellen. Diese Aufgabe wird durch die Merkmale der unabhängigen Ansprüche gelöst. Vorteilhafte Weiterbildungen sind den abhängigen Ansprüchen zu entnehmen.

Dazu wird der Motor auch gerade während des Verfahrens zur Erkennung der Bewegung, Bewegungsrichtung und der Position eines mittels eines elektrischen Motors bewegbaren Teils kurzgeschlossen und der dabei aus dem Nachlauf des Motors resultierende Generatorstrom erfaßt. Der bedeutende Vorteil dabei ist, dass der Generatorstrom permanent erfasst werden kann und dies zudem ohne dabei den aktiven Abbremsvorgang des Motors zu stoppen.

Zudem wird das Verfahren nochmals genauer, da eine Reihe vorher unerkannten Abweichungen erfasst und entsprechende Signalflanken der korrekten Richtung zugeordnet werden können.

So kann nämlich durch äußere mechanische Kräfte, beispielsweise durch mechanische Erschütterungen, ein manuelles Bewegen des bewegbaren Teils oder durch ein leichtes Zurückfedern nach dem Erreichen eines Anschlags eine derartige Abweichung auftreten. So weisen eventuell benutzte Gummidämpfer innerhalb des Motors, Spannfedern für die Hüllen eines eventuell zur Verbindung zwischen bewegbarem Teil und Motor verwendeten Seilzuges oder Gummipuffer oder -dichtungen an den Anschlägen eine gewisse Elastizität auf, die beim Nachlaufen zunächst aufgespannt und nachfolgend durch ein solches Zurückfedern abgebaut wird.

Eine punktuelle Erfassung der Generatorspannung kann diese alternierenden Richtungsänderungen nicht oder nur durch mehrfache Abtastung erfassen, wobei selbst dann noch die Schwingungsdauer dieser Richtungsänderungen bekannt sein müsste.

So weisen die Weiterbildungen des Verfahrens die Berücksichtigung des Nachlaufens in die unmittelbar vor dem Abschalten vorhandene Bewegungsrichtung sowie des Zurückfederns in die entgegengesetzte Richtung auf. Außerdem können noch sonstige Bewegungen des Motors bei abgeschalteter Motorantriebsspannung, beispielsweise durch mechanische Kräfte, erkannt und darauf durch unterschiedliche Ausgestaltungen reagiert werden. Unter Kenntnis der Bewegungsrichtung kön gen in der Positionsbestimmung weitgehend vermieden werden. Außerdem wird eine geeignete Schaltungsanordnung vorgestellt.

Die Aufgabe ist durch das Verfahren im Patentanspruch 1 sowie durch die Schaltungsanordnung gemäß Anspruch 6 gelöst. Vorteilhafte Weiterbildungen der Erfindung sind den abhängigen Ansprüchen zu entnehmen.

Als wesentliche Ursache für die im Stand der Technik weiterhin aufgetretenen Abweichungen bei der Positionsbestimmung wurde ermittelt, daß auch nach dem Abschalten der Motorantriebsspannung Signalflanken auftreten, insbesondere beim Anhalten des Motors ein bisher vernachlässigtes Nachlaufen auftritt, welches jedoch durchaus eine Dauer von einigen Umdrehungen des Motors hat und damit einige Signalflanken nicht oder fehlerhaft ausgewertet werden. Dieser Fehler gleicht sich auch nicht immer durch einen entsprechenden Nachlauf in entgegengesetzter Bewegungsrichtung aus. Außerdem kann durch äußere mechanische Kräfte, beispielsweise durch mechanische Erschütterungen, ein manuelles Bewegen des bewegbaren Teils oder durch ein leichtes Zurückfedem nach dem Erreichen eines Anschlags eine derartige Abweichung auftreten. So weisen eventuell benutzte Gummidämpfer innerhalb des Motors, Spannfedern für die Hüllen eines eventuell zur Verbindung zwischen bewegbarem Teil und Motor verwendeten Seilzuges oder Gummipuffer oder -dichtungen an den Anschlägen eine gewisse Elastizität auf, die beim Nachlaufen zunächst aufgespannt und nachfolgend durch ein solches Zurückfedem abgebaut wird. Jede dieser Bewegungsänderungen des Motors führt zu einer Spannungsinduktion nach dem Generatorprinzip. Da diese Abweichungen jedoch auftreten, während der Motor von der äußeren Motorantriebsspannung bereits getrennt ist, kann diese Generatorspannung oder/und der Generatorstrom erfaßt werden, der dabei beim üblicherweise realisierten Kurzschluß der. Wicklungsanschlüsse des Motors auftritt. Generatorstrom und Generatorspannung ermöglichen die Zuordnung zur der Signalflanken zu der tatsächlichen Bewegungsrichtung.

So weisen die Weiterbildungen des Verfahrens die Berücksichtigung des Nachlaufens in die unmittelbar vor dem Abschalten vorhandene Bewegungsrichtung sowie des Zurückfederns in die entgegengesetzte Richtung auf. Außerdem können noch sonstige Bewegungen des Motors bei abgeschalteter Motorantriebsspannung, beispielsweise durch mechanische Kräfte, erkannt und darauf durch unterschiedliche Ausgestaltungen reagiert werden. Unter Kenntnis der Bewegungsrichtung können dann die Signalflanken des Sensorsignals zur bisherigen Position addiert bzw. subtrahiert werden.

Die Schaltungsanordnung zur Erkennung der Bewegung, Bewegungsrichtung und der Position eines mittels eines elektrischen Motors bewegbaren Teils weist als Besonderheit ein einen Spannungsabfall erzeugendes elektrisches Bauelement im Kurzschlußzweig zwischen denjenigen Wicklungsanschlüssen des Motors auf, die zum Stoppen des Motors eingestellt werden. Neben separaten Meßwiderständen kann auch der Innenwiderstand eines Bauelementes, insbesondere des Schaltmittels bereits einen ausreichend großen Spannungsabfall erzeugen. Der Meßwiderstand kann selbstverständlich auch in mehrere einzelne Meßwiderstände aufgeteilt werden oder anstelle eines separaten Bauelements durch einen entsprechenden Leiterbahnwiderstand realisiert werden. Darüber hinaus kann der Spannungsabfall auch über einer Diode erfaßt werden, die gegenüber der Generatorspannung in Durchlaßrichtung gepolt ist. Die vorgegebene Schwelle der Generatorspannung ist in diesem Fall die Durchlaßspannung der Diode (ca. 0,7 Volt). Gegenüber Meßwiderständen weist eine Diode den Vorteil eines deutlich geringeren Innenwiderstands auf.

Die Schaltungsanordnungen ermöglichen nicht nur die Erfassung des Generatorstroms sondern kann auch noch ergänzend zur Erfassung des Motorantriebsstromes bei zugeschalteter Motorantriebsspannung genutzt werden, insbesondere auch für die Erfassung des Zeitpunktes der Richtungsumkehr bei Wechsel der Richtung der Motorantriebsspannung gemäß der DE 197 33 581 eingesetzt werden.

Die Erfindung soll nachfolgend anhand von Ausführungsbeispielen und der Figuren näher erläutert werden. Kurze Beschreibung der Figuren:
- Figur 1: schematische Darstellung einer Schaltungsanordnung zur Erkennung der Bewegung, Bewegungsrichtung und der Position eines mittels eines elektrischen Motors (M) bewegbaren Teils
- Figur 2a)-f): Zeitdiagramme des Meßsignals 3.S für unterschiedliche Bewegungsfälle
- Figur 3: weiteres Ausführungsbeispiel der Schaltungsanordnung
- Figur 4: Schaltungsanordnung mit vier in einer H-Brücke zum Motor geschalteten Schaltmitteln mit jeweils einer in Sperrichtung gepolten Diodenüberbrückung
- Figur 4a: Ausführung des Schaltmittels als MOSFET-Transistor mit Substratanbindung an Source und somit einer inhärenten Diode
- Figur 5: Meßspannungsverlauf vor und nach dem Stoppen des Motors für eine Schaltung gemäß Figur 4
- Figur 6: zeitliche Ansteuerung der Schaltmittel gemäß der Figuren 4 und 5

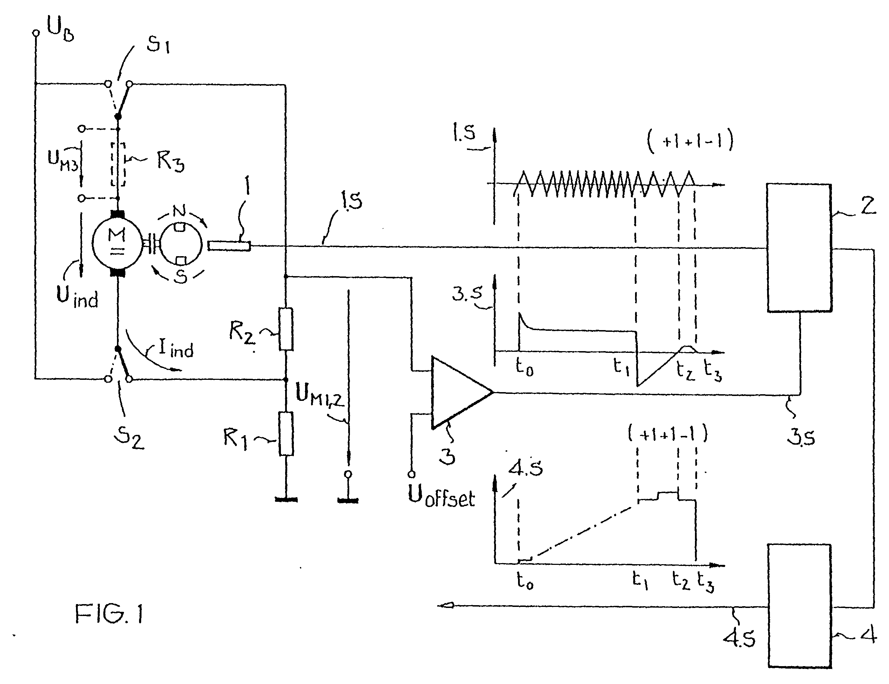

Figur 1 zeigt eine schematische Darstellung der Schaltungsanordnung zur Erkennung der Bewegung, Bewegungsrichtung und der Position eines mittels eines elektrischen Motors M bewegbaren Teils. Der Motor M ist mit seinen Anschlüssen über zwei Schaltmittel S₁, S₂ mit der Motorantriebsspannung U_{B} einerseits und zum Bezugspotential (Masse ┴) hin andererseits verbunden, wobei zum Antreiben des Motors mittels der Motorantriebsspannung U_{B} jeweils genau immer ein Schaltmittel S1/S2 in Richtung von U_{B}, das andere Schaltmittel S2/S1 in Richtung Bezugspotential (Masse ┴) geschaltet ist. Der Motor M wird durch eine einer gewünschten Bewegungsrichtung entsprechende über die Schaltmittel S1,S2 einstellbare Polung der Motorantriebsspannung U_{B} angetrieben.

Zum Abschalten des Motors M werden beide Schaltmittel S₁, S₂ auf Bezugspotential (Masse ┴) gelegt, so daß über dem Motor M keine äußere Motorantriebsspannung mehr anliegt.

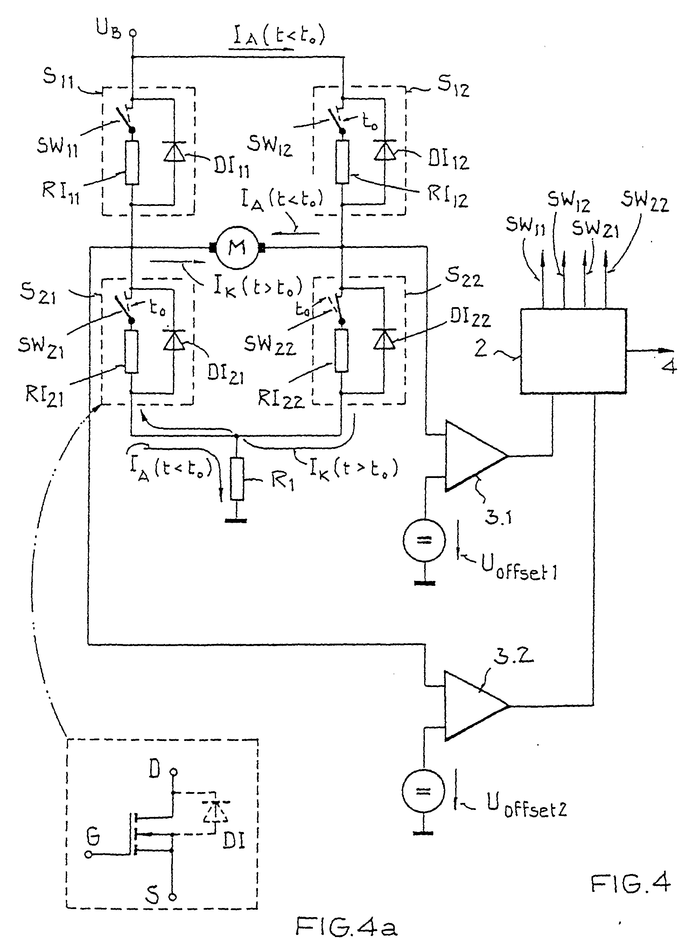

Die auf Bezugspotential geschalteten Schaltpunkte der Schaltmittel S1 und S2 sind untereinander über einen Meßwiderstand R2 kurzgeschlossen und darüber hinaus über einen Meßwiderstand R1 auf Bezugspotential ┴ angebunden, wodurch der Verbindungspunkt zwischen R1 und R2, an dem alle auf Bezugspotential geschalteten Schaltpunkte angebunden sind, immer einen Bezug auf das Bezugspotential hat. Weitere Ausführungsformen des den Spannungsabfall in geeigneter Weise erzeugenden Bauelements werden noch im Zusammenhang mit Figur 4 beschrieben.

Die Meßanordnung 3 ist in diesem Ausführungsbeispiel als einfache Verstärkerschaltung realisiert, die die über R1 und R2 gegenüber dem Bezugspotential ⊥ abfallende Spannung U_{M1,2} erfaßt. Zur weiteren Vereinfachung der nachfolgenden Signalverarbeitung wird der Verstärker mit einer Offsetspannung U_{offset} betrieben, die es ermöglicht, anstelle eines vorzeichenbehafteten Signals ein entsprechend ins Positive verschobenes Signal anhand der (positiven) Amplitude auszuwerten. Die Auswertung 2 führt dazu beispielsweise analog oder auch digital einen Vergleich mit Schwellwerten durch, ordnet die Signalflanken des Sensorsignals 1.S entsprechend einer Bewegungsrichtung zu und verändert entsprechend den damit verbundenen Positionszähler 4. Selbstverständlich kann aus dem erfaßten Generatorstrom auch der Endzeitpunkt der Bewegung aus einzelnen Meßpunkten durch Interpolation gewonnen werden.

In Figur 1 gestrichelt angedeutet ist eine weitere Möglichkeit, bei der ein Meßwiderstand R3 in Reihe mit dem Motor innerhalb zwischen die Schaltmittel S1,S2 geschaltet ist und dort die Spannung U_{M3} einer Meßanordnung zugeführt wird. Diese Ausführungsform ist grundsätzlich ohne weiteres möglich, weist jedoch kein direktes Bezugspotential auf und ist daher floatend, so daß entsprechend hochwertige Differenzverstärker mit einer wirkungsvollen Gleichtaktunterdrückung eingesetzt werden müßten, was höhere Kosten verursacht. Der Generatorstrom kann jedoch grundsätzlich genauso erfaßt und daraus eine Bewegung erkannt, die Richtung der Bewegung und die Position entsprechend der dabei auftretenden Signalflanken ermittelt werden.

Der Motor M weist in diesem Ausführungsbeispiel ein magnetisches Polrad (N=Nord, S=Süd) und einen zugehörigen Hallsensor 1 auf, welcher ein zu der Anzahl der erfolgenden Umdrehungen des Motors proportionalen Signal 1.S erzeugt. Andere Sensortypen, wie beispielsweise ein elektrischer Berührungsimpulsgeber o.ä. sind ebenfalls möglich. Dieses Umdrehungssignal ermöglicht jedoch keine eindeutige Zuordnung einer Bewegungsrichtung. Während des Antriebs über die Motorantriebsspannung U_{B} kann im allgemeinen davon ausgegangen werden, daß die Bewegungsrichtung der gewählten Polung der Motorantriebsspannung entspricht. Wird die Motorantriebsspannung U_{B} jedoch abgeschaltet, ist diese Zuordnung nicht mehr zweifelsfrei möglich, da neben Nachlaufeffekten auch ein Zurückfedern o.ä. auftreten kann.

Tritt nun, während der Motor von der Motorantriebsspannung U_{B} wie in Figur 1 getrennt ist, eine Bewegung des Motors bzw. der damit verbundenen bewegbaren Teile auf, kommt es zu einer Induktion einer Generatorspannung U_{ind}, die aufgrund des Kurzschlusses über einen Meßwiderstand R2 zu einem erfassbaren Generatorstromfluß I_{ind} führt. Dieser ist entsprechend der Richtung der Bewegung gerichtet. Entsprechend kommt es zu einem Spannungsabfall über R2, der von dem Verstärker 3 erfaßt wird. Aufgrund der Offsetspannung U_{offset} wird das verstärkte Ausgangssignal 3.S im funktionell wesentlichen Bereich immer größer gleich Null sein. Da aus dem Signal 3.S auch nur die Bewegung als solche und ihre Richtung abgeleitet werden muß, ist die Genauigkeit hierbei nicht entscheidend.

Der Widerstand R1 und die Erfassung des gemeinsamen Spannungsabfalls U_{M1,2} von R1 und R2 ermöglicht, mit dieser Meßanordnung 3 auch während angeschalteter Motorantriebsspannung U_{B} den dann über R1 oder aber über R1 und R2 je nach Stellung der Schaltmittel S1/S2 fließenden Motorantriebsstrom zu erfassen.

Sollte ein Motor mit mehreren Antriebsspannungen betrieben werden oder die Wicklungszahl durch mehrere Wicklungsanschlüsse wechselbar sein, so ist der Meßwiderstand R2 immer zwischen denjenigen Schaltpunkten anzuordnen, die zum Abschalten vorgesehen sind. Sollten dies mehrere sein, sollten alle einen Meßwiderstand R2 aufweisen. Da jedoch immer nur genau eine Schaltkonstellation angenommen werden kann, könnte weiterhin eine geeignet angepaßte Meßanordnung alle Meßwiderstände parallel erfassen, bspw. durch eine open-collector Schaltung o.ä..

Die in Figur 1 skizzenhaft ergänzten Zeitdiagramme des Hallsensorsignals 1.S, des Spannungsabfalls U_{M1,2} von R1 und R2 und des Positionszählers 4.1 ermöglichen eine anschauliche Verdeutlichung der Wirkungsweise.

Vom Zeitpunkt t0 an wird der Motor M mit S2 an U_{B} und S1 Richtung Bezugspotential bestromt. Das Hallsensorsignal 1.S weist mit zunehmender Frequenz Signalflanken auf, die einer zunehmenden Drehzahl des Motors M entsprechen. Der Spannungsabfall U_{M1,2} zeigt in diesem Zeitbereich den Motorantriebsstrom U_{B}. Zum Zeitpunkt t1 wird die Motorantriebsspannung U_{B} abgeschaltet, indem die Schaltmittel S1 und S2 beide auf Bezugspotential ⊥ geschaltet werden. Aufgrund der Masseträgheit läuft der Motor jedoch nach und zwar in die alte Bewegungsrichtung, so daß es in diesem Ausführungsbeispiel zu einer gerade entgegengesetzt gerichteten Spannungsinduktion U_{ind} und einem entsprechend entgegengesetzten Generatorstrom I_{ind} kommt, der über den äußerst niederohmigen Meßwiderstand R2 jedoch auch schnell abnimmt. Dennoch treten zwischen t1 und t3 am Hallsensorsignal 1.S beispielsweise noch insgesamt drei weitere Signalflanken auf. Die Anzahl hängt dabei stark von den mechanischen Parametern des bewegten Systems ab. Ohne Richtungserkennung des Generatorstroms könnte man diese Signalflanken nach dem Abschalten der Motorantriebsspannung U_{B} maximal einzig der alten Bewegungsrichtung zuordnen oder müßte sie ignorieren. Mittels des Verfahrens der Erfassung der Generatorspannung oder/und des Generatorstroms, in diesem Ausführungsbeispiel als Spannungsabfall U_{M1,2} über R1 und R2, kann erkannt werden, daß zunächst zwischen t1 und t2 ein negativer Generatorstrom fließt, der jedoch zum Zeitpunkt t2 einen Nulldurchgang und nachfolgend bis t3 eine positive Amplitude aufweist. Dies kommt dann vor, wenn nach dem Nachlaufen in die alte Bewegungsrichtung ein Zurückfedern in die neue, entgegengesetzte Bewegungsrichtung auftritt. Die letzte der drei während t1 bis t3 auftretenden Signalflanken ist daher in entgegengesetzter Richtung; eine Fehlbeurteilung würde jedesmal zu einer Abweichung um zwei Stufen am Positionszähler 4 führen, wie dies anhand des Zeitdiagramms des symbolisch visualisierten Ausgangssignals 4.S des Positionszählers 4 nachvollzogen werden kann. Während des äußeren Motorantriebs von t0 bis t1 kommt es zu einem Ansteigen des Positionszählers 4, der sich auch zwischen t1 und t2 aufgrund des Nachlaufens fortsetzt (+1,+1), die zwischen t2 und t3 auftretende Signalflanke jedoch ein Zurückfedern (-1) ist, daß gemäß der entgegengesetzten Generatorstromrichtung erkannt und als (-1) am Positionszähler 4 berücksichtigt wird.

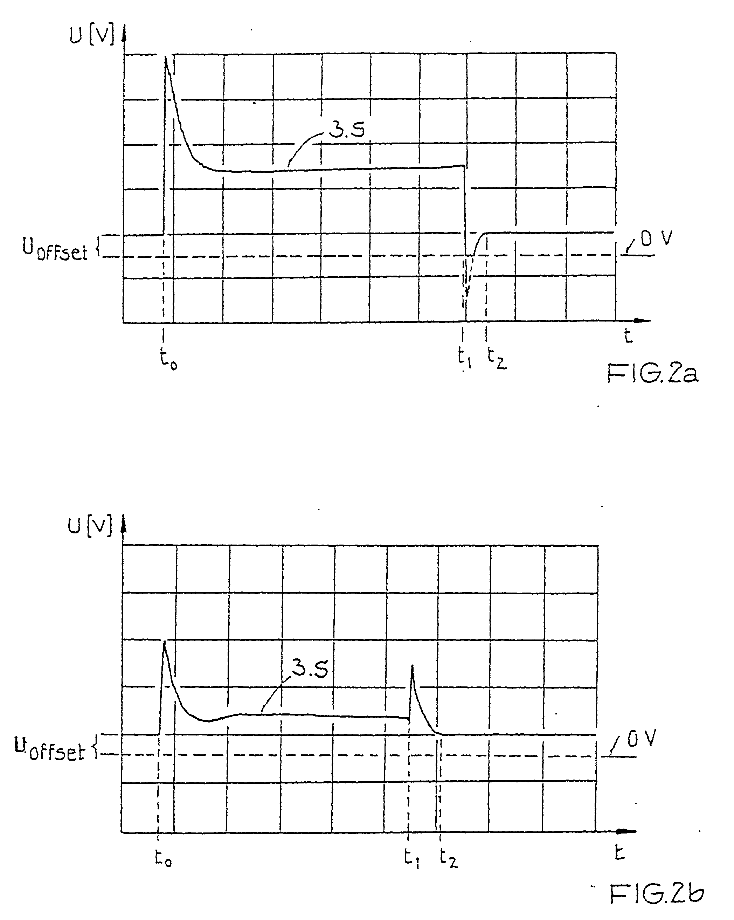

Die Figuren 2a) bis 2f) kennzeichnen Zeitdiagramme des von der Meßanordnung 3 weitergegebenen Meßsignals 3.S für unterschiedliche Bewegungssituationen, die für dieses Ausführungsbeispiel anhand eines elektrischen Fensterhebers gemessen wurden.

Figur 2a) zeigt zunächst von t0 bis t1 den Hochlauf (Schließen) der Fensterscheibe, wobei der in diesem Zeitbereich erfaßte Motorantriebsstrom zunächst aufgrund des Ruhens des Motors stark ansteigt und mit zunehmender Drehzahl absinkt, wobei zum Zeitpunkt t1 manuell oder softwaretechnisch abgeschaltet wird, ohne daß die Scheibe dabei bereits auf einen Gegenstand, bzw. einen oberen Anschlag oder ein Hindernis getroffen ist. Aufgrund der Massenträgheit des bewegten Systems kommt es nach dem Abschalten zu einem Nachlaufen weiter oben, welches zu einem negativen Spannungsabfall aufgrund des Generatorstroms führt, der jedoch aufgrund der Offsetspannung ins Positive verschoben und die verbleibende, gestrichelt gezeichnete Spitze nicht ausgewertet, quasi abgeschnitten wird. Wesentlich für die Auswertung ist einzig das in der Amplitude umgesetzte des gemessenen Spannungsabfalls UM1,2 Vorzeichen des Generatorstroms und die Dauer bis zum Erreichen des Nullniveaus, welches beispielsweise durch entsprechende obere und untere Schwellen mit einer bestimmten Toleranz angenähert wird. Die Toleranzen können dazu dienen, das unvermeidlich am Meßsignal auftretende Kommutierungsrauschen aufzufangen. Analog dazu sind Interpolationsverfahren zur Bestimmung von t2 und t3 denkbar. Zwischen t1 und t2 auftretende Signalflanken können eindeutig der alten Bewegungsrichtung, dem Hochlauf, zugeordnet werden.

Figur 2b) zeigt nun einen Tieflauf (Öffnen) der Fensterscheibe mit manueller oder softwaretechnischer Abschaltung zum Zeitpunkt t1, was entsprechend der Bewegungsrichtung nun zu einem posistiven Spannungsabfall aufgrund des Generatorstroms zwischen t1 und t2 führt, so daß dort auftretende Signalflanken ebenfalls eindeutig der vorherigen Bewegungsrichtung, also dem Tieflauf zugeordnet werden können.

In Figur 2c) wird nun der Verlauf des Meßsignals 3.S für den Fall gezeigt, bei dem eine bereits an einem Anschlag oder Hindernis befindliche Scheibe nochmals in diese Richtung bestromt wird. Wie aus dem Verlauf zu entnehmen, tritt nach dem kurzzeitigen Abfall des Motorstroms unmittelbar wieder ein starker Anstieg auf, da der Motor nach der Überwindung kleiner Toleranzen oder Elastizitäten sofort wieder blockiert wird und die Drehzahl gegen Null und somit der Strom einzig begrenzt durch den ohmschen Innenwiderstand des Motors bei t5 entsprechend ansteigt. Dies wird mit der Auswertung ebenfalls erkannt und führt hard- oder softwaretechnisch zu einer Abschaltung der Motorantriebsspannung. In diesem Fall tritt der in Figur 2a) beobachtete negative Spannungsabfall nicht auf, da bei blockiertem Motor ein Nachlaufen unmöglich ist. Die Zeitpunkte t1 und t2 fallen in t1/2 unmittelbar zusammen. Im Gegensatz dazu ist jedoch bei mehreren Fensterscheiben stark abhängig von den Toleranzen und Elastizitäten der einzelnen Baugruppen ein mehr oder weniger starken Zurückfedern und bedingt dadurch ein positiver Spannungsabfall aufgrund eines Generatorstroms zu beobachten, was zum Zeitpunkt t3 zumindest unter eine Schwelle sinkt. Versuche zeigten, daß bei einzelnen getesteten Anordnungen während dieser Zeit zwischen t1,2 und t3 tatsächlich Signalflanken auftraten, die nur dank dieses Verfahrens als rückwärts gerichtet erkannt und entsprechend bei der Positionszählung berücksichtigt werden konnten.

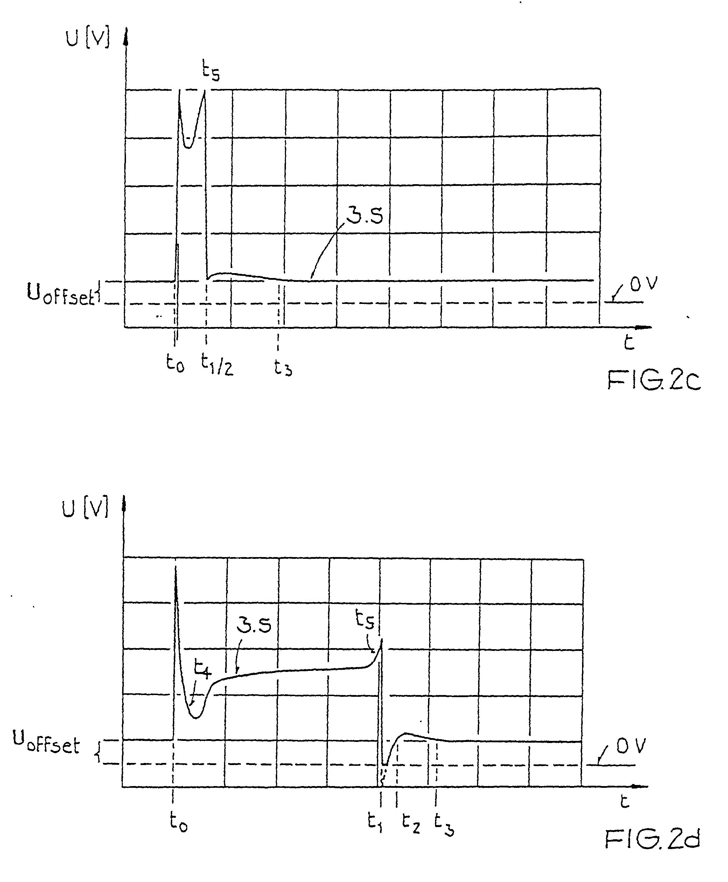

Figur 2d) zeigt nun den bereits in Figur 1 skizzenhaft eingefügten Fall des leichten Anschlagens an ein eventuell auch elastisch nachgebendes Hindernis beim Hochlauf, was zum Zeitpunkt t5 zu einem Motorstromanstieg führt, der jedoch bei entsprechender Auslegung der oberen Überstromabschaltschwelle bereits schnell zur Abschaltung führt. In diesem Fall kann nachfolgend entsprechend dem negativen Meßsignalausschlag zwischen t1 und t2 ein Nachlaufen in die alte Bewegungsrichtung, zwischen t2 und t3 jedoch ein Zurückfedern beobachtet werden. Das unmittelbar nach dem Anschalten der Motorantriebsspannung zum Zeitpunkt t0 dann in t4 beobachtbare starke Absinken und nachfolgende Ansteigen auf das Normalniveau ist durch ein kurzzeitiges Leerlaufdrehen des Motors begründet, in dem beispielsweise Schlupftoleranzen zwischen den einzelnen bewegten Baugruppen überwunden werden.

Figur 2e) zeigt nun noch, daß mittels der vorgeschlagenen Schaltungsanordnung neben dem klassischen Abtrieb und Stop des Motors auch die Vorgänge beim direkten Umpolen der Motorantriebsspannung durch Wechsel der Schaltmittelstellung von S1 und S2 gemäß der nicht vorveröffentlichten DE 197 33 581 beobachtet werden können, mit der vorgeschlagenen Schaltungsanordnung sowohl das in der DE 197 33 581 als auch das in dieser Anmeldung beanspruchte Verfahren anwendbar sind. Die Spannung, die bei äußerer Beschaltung ja über dem Meßwiderstand R1 abfällt, wird in t6 zu Null, steigt jedoch mit abnehmender Motordrehzahl in die alte Bewegungsrichtung an und erreicht zum Zeitpunkt t7 ein Maximum, welches als Zeitpunkt der Richtungsumkehr ausgewertet werden kann, wobei die Amplitude dieses Maximums eine starke Abhängigkeit von dem aktuellen Lastmoment aufweist und Schwellen vorzugsweise entsprechend aus vorherigen Werten abgeleitet werden sollten. Diese Schaltungsanordnung kann somit auch den Zeitpunkt der Bewegungsrichtungsumkehr bei Umpolung der Motorantriebsspannung erfassen, ohne daß für diese zwei an sich unterschiedlichen Verfahren außer dem Meßwiderstand R2 im Kurzschlußpfad zusätzliche Bauelemente erforderlich wären. Insbesondere wird nur eine Meßanordnung 3 benötigt, wenn die Auswertung 2 entsprechend angepaßt wird, was bei einer Realisierung als ein Microcontroller ohne weiteres auch softwaretechnisch möglich ist.

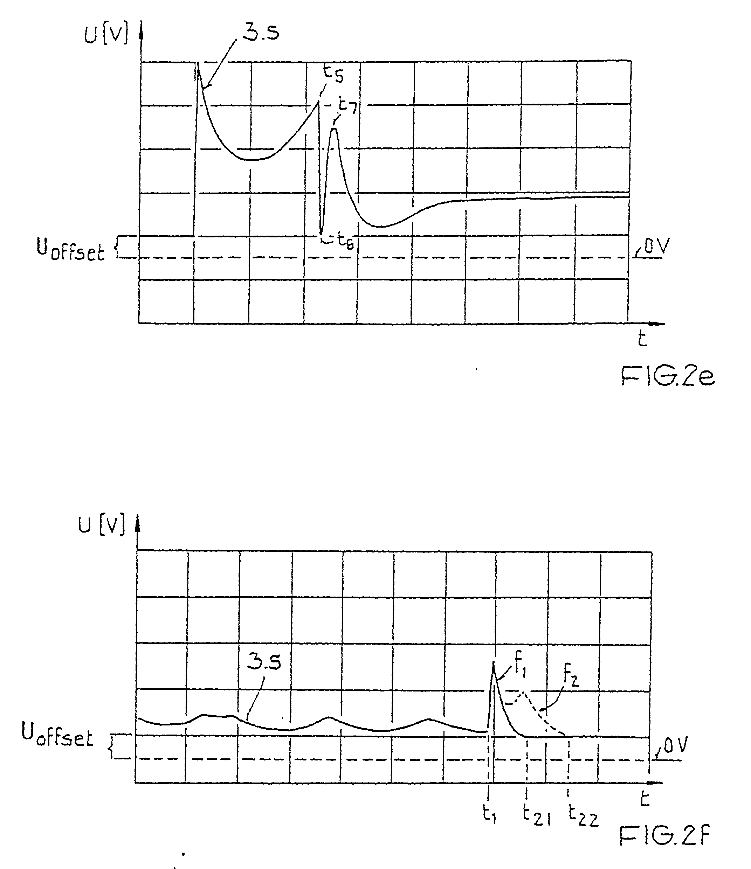

Figur 2f) zeigt nun noch zwei unterschiedliche Fälle f1 und f2 des Meßsignals bei äußeren mechanischen Störungen, wie sie im Fall eines Fensterhebers in einem Kraftfahrzeug beispielsweise durch Bodenunebenheiten hervorgerufen werden, jedoch auch bei Stellantrieben von Werkzeugmaschinen durch Schwingungen anderer Maschinen etc. auftreten können. Insbesondere bei abgeschalteter Motorantriebsspannung ab t1 kann das Nachlaufen durch solche Erschütterungen verlängert oder verkürzt werden. Die korrekte Nachlaufzeit t21 für f1 und t22 für f2 kann jedoch exakt bestimmt und auftretende Signalflanken zweifelsfrei zugeordnet werden.

Selbstverständlich ist es auch möglich, im Ruhezustand des Motors bei abgeschalteter Motorantriebsspannung auftretende Bewegungen aufgrund der Generatorspannung bzw. des Generatorstroms zu detektieren, ihre Bewegungsrichtung zu erfassen und den Positionszähler entsprechend zu aktualisieren. Dies kann beispielsweise bei Stellantrieben von Werkzeugmaschinen vorteilhaft sein, wenn beim Austasuch von Werkzeugen unbeabsichtigt ein bewegbarer Werkzeugträgerarm verschoben wird. Ein Justierungslauf könnte entfallen.

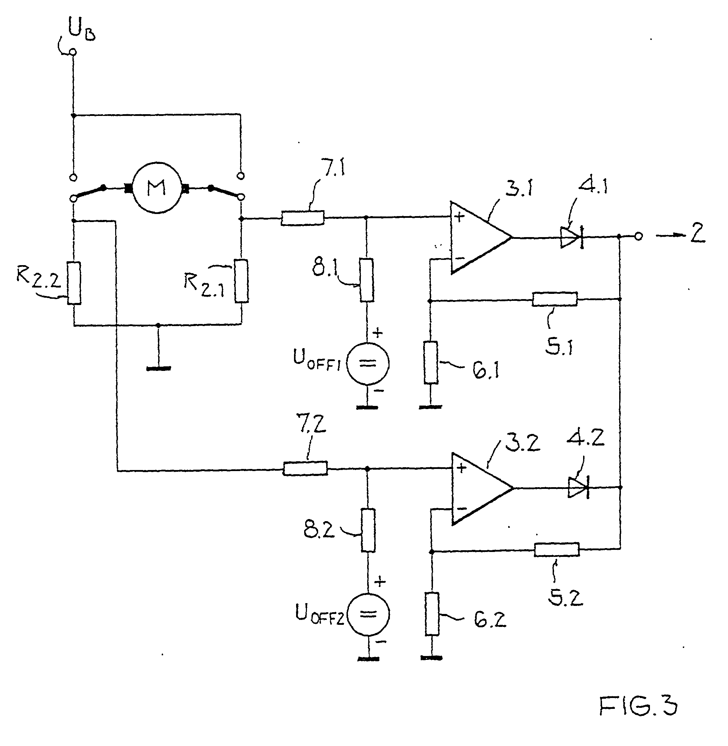

Die Figur 3 zeigt eine weitere Schaltungsanordnung, bei der zwischen dem Verbindungspunkt der auf Bezugspotential zu schaltenden Schaltpunkte der Schaltmittel S1 und S2 und dem Bezugspotential kein Meßwiderstand R1 vorgesehen ist, sondern der Meßwiderstand R2 beidseitig dieses Verbindungspunktes als R21 und R22 aufgeteilt wird. Diese Schaltungsanordnung weist den Vorteil auf, daß während des Anschlusses der Motorantriebsspannung in beide Bewegungsrichtungen der gleiche elektrische Widerstand auftritt, wenn R21 und R22 gleich ausgelegt werden. Während für die Erfassung des Generatorstromes nur eine Meßanordnung 3 über einem der beiden Meßwiderstände R21 oder R22 erforderlich wäre, so kann bei Motorantriebsbetrieb jedoch von einer Meßanordnung nur ein Pfad erfaßt werden, so daß zwei Meßanordnungen 3.1 und 3.2 erforderlich sind. Diese sind identisch ausgeführt, weisen jedoch als Besonderheit eine Rückkopplung über die Widerstände 5.1 bzw. 5.2 auf. Wiederum wurde eine Offsetspannung U_{off1} und U_{off2} verwendet, die als Gleichanteil jeweils über die Widerstände 8.1 und 8.2 am jeweiligen positiven Eingang des als Operationsverstärker ausgeführten Meßanordnungen 3.1 bzw. 3.2 anliegt. Der negative Eingang weist jeweils die Rückkopplung mit einem Bezug auf Bezugspotential ⊥ über die Widerstände 6.1 bzw. 6.2 auf.

Die Ausgänge der Meßanordnungen 3.1 und 3.2 können durch Zwischenschaltung jeweils einer Diode 4.1 und 4.2 als "wired analog OR" zusammengekoppelt werden, wodurch anstelle zweier separater Eingänge an der Auswertung nur einer erforderlich ist, die "ODER"-überlagerten Signale jedoch bei zugeschalteter Motorantriebsspannung entsprechend der Polung zugeordnet werden müssen, da diese einander nicht unterscheiden. Im Generatorfall fließt der Strom jedoch durch R21 und R22 in einem Kreis, so daß die gegen Bezugspotential erfaßten Spannungsabfälle entgegengesetztes Vorzeichen aufweisen und so jeweils nur der positive weitergeleitet wird. Bei zwei getrennten Eingängen der Auswertung 2 können aus den Signalen der Meßanordnungen 3.1 und 3.2 jedoch die Bewegungsrichtung wieder direkt abgeleitet werden.

Figur 4 zeigt eine Schaltungsanordnung zur Durchführung des Verfahrens, bei der vier Schaltmittel S11,S12,S21,S22 zu einer H-Brücke geschaltet an den beiden Wicklungsanschlüssen des Motors M geschaltet sind. Dabei sind die Schaltmittel S11 und S12 jeweils mit der Motorantriebsspannung UB verbunden, die Schaltmittel S21 und S22 mit dem Bezugspotential ⊥ über den Verbindungspunkt und den Widerstand R1. Zum Antreiben des Motors M werden entweder S11 und S22 oder für die entsprechend entgegengesetzte Drehrichtung S12 und S21 geschlossen.

Die Schaltmittel S11,S12,S21 und S22 sind als MOSFET-Transistoren ausgeführt, deren Substratanschluß B mit Source verbunden ist, wie dies in Figur 4a dargestellt ist. In Figur 4a wird dabei bereits angedeutet, daß dadurch innerhalb der MOSFETs eine inhärente Diode Dl gebildet wird, die jeweils von Drain D auf Source S in Sperrichtung geschaltet ist und somit bei geöffnetem Schaltmittel während des Antriebs des Motors M in die entgegengesetzte Drehrichtung keinen Strom führt.

Zur Veranschaulichung der Wirkungsweise wurde in Figur 4 anstelle der MOSFETs für die Schaltmittel S11-S22 jeweils eine Ersatzschaltung bestehend aus einem Schalter SW11-SW22, einem Innenwiderstand RI und einer dazu parallel geschalteten Diode DI11-D22 verwendet.

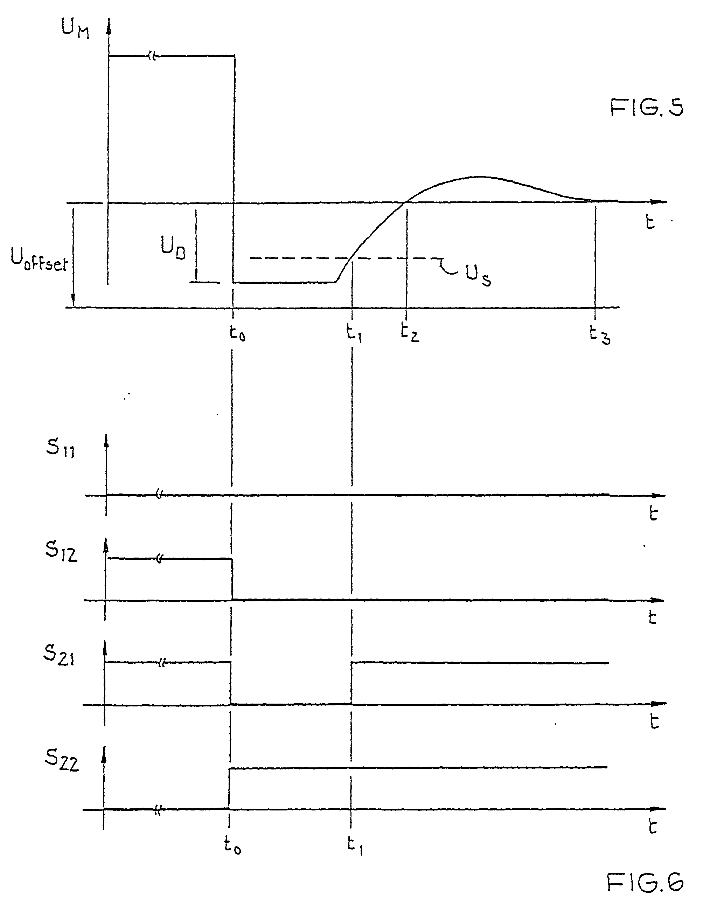

Mit der Auswerteeinheit 2 sind wiederum ein Hallsensor 1 zur Erfassung der drehzahlproportionalen Signalflanken und zwei Meßanordnungen 3.1 und 3.2 verbunden, die jeweils den Spannungsabfall UM über die Dioden D22 und D21 als die entscheidenden den Spannungsabfall aufweisenden Bauelemente im Kurzschlußfall und züsätzlich über R1 für den Normalbetrieb erfassen. Die Auswerteeinheit 2 weist Ausgänge zur Ansteuerung der Schalter SW11-SW22 auf und gibt die aus den Signalflanken des Hallsensors und dem Spannungsabfall abgeleiteten Drehzahl- und Drehrichtungsinformation an den Positionszähler 4 (vgl. auch analog Figur 1) weiter. Die Meßanordnungen 3.1 und 3.2 können wiederum einen Spannungs-Offset Uoffset1,2 aufweisen, wodurch das im folgenden noch näher betrachtete Spannungssignal Um gegenüber dem Bezugspotential um diesen Betrag Uoffset erhöht wird (vgl. Fig. 5).

Der Ablauf des Verfahrens soll nunmehr anhand der Figuren 4,5 und 6 erläutert werden, wobei Figur 4 den für die Meßanordnung 3.2 erfaßbaren Spannungsabfall UM zeigt und Figur 6 den zeitlichen verlauf der Steuerung der Schaltmittel S11 bis S22.

Der Motor M soll zum Zeitpunkt t0 gestoppt werden. Zuvor (t<t0) wird er in eine Drehrichtung angetrieben, indem die Schalter SW12 und SW21 geschlossen sind und somit von UB über SW12 zum Motors M und von da aus über SW21 und R1 der Motorantriebsstrom IA(t<t0) fließt. Die Schalter SW11 und SW22 sind geöffnet und die inhärenten Dioden DI11 und Dl22 in Sperrichtung gepolt.

Der Antriebsstrom la(t<to) erzeugt am Widerstand R1 einen Spannungsabfall, der von der Meßanordnung 3.2 erfaßt wird, wie dies in Figur 5 zu erkennen ist.

Zum Zeitpunkt t0 werden die Schalter SW21 und SW12 geöffnet, der Schalter SW22 im Gegenzug geschlossen, wie dies in Figur 4 angedeutet und aus Figur 6 noch deutlicher zu erkennen ist. Der Motor erzeugt nun aufgrund des Generatorprinzips und der Masseträgheit eine Generatorspannung, die zum schnellen Abstoppen des Motors kurzgeschlossen wird. Dieser Kurzschluß erfolgt über den geschlossenen Schalter SW22 und die Diode DI21 des MOSFET-Schaltmittels S21, wie durch den Kurzschlußstrom Iₖ(t>t0') angedeutet. Die Generatorspannung ist gerade entgegengesetzt zur Motorantriebsspannung (UB→⊥) gepolt und die Diode DI21 wird leitend. Der besondere Vorteil dieser Überbrückung gegenüber einem Kurzschluß über einem Meßwiderstand R2 gemäß Figur 1 ist für eine Spannung oberhalb der Diodendurchlaßspannung der extrem geringe Innenwiderstand der Diode, so daß der Spannungsabfall nur unwesentlich über diese ansteigt und ein relativ hoher Kurzschlußstrom fließen kann, wodurch der Motor entsprechend schneller zum Stillstand kommt. Sinkt in t1 der Spannungsabfall über der Diode unter eine vorgegebene Schwelle Us, die näherungsweise bei der Diodenspannung UD liegen kann, wird auch der zweite auf Bezugspotential geschaltete Schalter SW21 im Kurzschlußkreis geschlossen (vgl. Fig. 6), der parallel zur Diode DI21 ist. Der nunmehr messbare Spannungsabfall UM fällt nur noch über dem Innenwiderstand RI des Schaltmittels S21 ab.

Zum Zeitpunkt t2 erreicht der Strom den Nullpunkt und damit auch der Motor M den Stillstand. Es kann jedoch nachfolgend noch ein Zurückfedern des Motors beziehungsweise damit verbundener Baugruppen auftreten, so daß eine wiederum entgegengesetzte Generatorspannung auftritt, die grundsätzlcih über dem Innenwiderstand RI der geschlossenen Schaltmittel S21 und S22 gemessen werden kann und weiter auftretende Signalflanken entsprechend dem Vorzeichen der Generatorspannung einer Drehrichtung zugeordnet werden können. Bei entsprechender Auslegung der mechanischen Komponenten kann dieses Nachfedern auch vernachlässigt werden, indem nach t1 oder t2 auftretende Signalflanken nicht ausgewertet werden oder vereinfacht generell der entgegengesetzten Bewegungsrichtung zugeordnet werden.

## Patentansprüche

1. Verfahren zur Erkennung der Bewegung, Bewegungsrichtung und der Position eines mittels eines elektrischen Motors (M) bewegbaren Teils, insbesondere eines elektrischen Fensterhebers,
a) bei dem der Motor (M) durch eine einer gewünschten Bewegungsrichtung entsprechenden Polung einer Motorantriebsspannung (U_{B}) angetrieben wird, und
b) bei dem Signalflanken eines zu der Anzahl der Umdrehungen des Motors proportionalen Signals (1.S) einer Bewegungsrichtung des zu bewegenden Teils zugeordnet (2) und entsprechend gezählt (4.S) werden,
c) nach dem Abtrennen der Motorantriebsspannung (U_{B}) Bewegungen des Motors (M) erfaßt und auftretende Signalflanken einer Bewegungsrichtung zugeordnet werden, **dadurch gekennzeichnet, daß**
d) auf einen Befehl zum Abschalten der Motorantriebsspannung (U_{B}) der Motor (M) kurzgeschlossen und dabei der aus dem Nachlauf des Motors resultierende Generatorstrom (I_{ind}) erfaßt wird.

2. Verfahren nach Anspruch 1, **dadurch gekennzeichnet, daß** die unmittelbar nach dem Abschalten der Motorantriebsspannung (U_{B}) auftretenden Signalflanken der bisherigen Bewegungsrichtung zugeordnet werden, bis der Generatorstrom (I_{ind}) erstmalig eine vorgegebene Schwelle unterschreiten.

3. Verfahren nach Anspruch 2, **dadurch gekennzeichnet, daß** die nach dem erstmaligen Unterschreiten der vorgegebenen Schwelle bei abgeschalteter äußerer Motorantriebsspannung (U_{B}) auftretenden Signalflanken
a) nicht ausgewertet werden oder
b) generell der entgegengesetzten Bewegungsrichtung zugeordnet werden oder
c) in Abhängigkeit vom Vorzeichen des dabei auftretenden Generatorstroms (I_{ind}) der diesem Vorzeichen entsprechenden Bewegungsrichtung zugeordnet werden.

4. Verfahren nach einem der vorangehenden Ansprüche, **dadurch gekennzeichnet, daß** zum Stoppen des Motors aus einer alten Bewegungsrichtung heraus der Motor (M) zunächst von der Motorantriebsspannung (U_{B}) getrennt,
a) über wenigstens ein einen Spannungsabfall erzeugendes elektrisches Bauelement (R3, R2.1,R.2.2, DI21/DI22) kurzgeschlossen und der dabei fließende Generatorstrom als Spannungsabfall über das Bauelement (R3, R2.1,R.2.2, DI21/DI22) erfasst wird und
b) anhand der Zeitdauer (t0→t1) des Spannungsabfalls (UM) die Zeitdauer des Nachdrehens in die alte Bewegungsrichtung bestimmt und während des Nachlaufens auftretende Signalflanken des Sensorsignals (1.S) der entsprechenden Bewegungsrichtung zugeordnet werden.

5. Verfahren nach Anspruch 4, **dadurch gekennzeichnet, dass** zum Stoppen der Motor (M) über eine entsprechend der Generatorspannung in Durchlaßrichtung gepolten Diode (DI21/DI22) kurzgeschlossen und der dabei fließende Generatorstrom als Spannungsabfall über der Diode (DI21/DI22) erfasst wird.

6. Verfahren nach Anspruch 5, **dadurch gekennzeichnet, daß** nach dem Abklingen des Nachdrehens (t1) in die alte Bewegungsrichtung ein zur Diode parallel geschaltetes Schaltmittel (SW21) geschlossen wird und nachfolgend auftretende Signalflanken des Sensorsignals (1.S) bei der Positionsbestimmung
a) nicht berücksichtigt werden oder
b) generell der entgegengesetzten Bewegungsrichtung zugeordnet werden oder
c) in Abhängigkeit vom Vorzeichen des über einem Innenwiderstand (RI) des Schaltmittels (S21) erfassbaren Spannungsabfalls der diesem Vorzeichen entsprechenden Bewegungsrichtung zugeordnet werden.

7. Schaltungsanordnung zur Erkennung der Bewegung, Bewegungsrichtung und der Position eines mittels eines elektrischen Motors (M) bewegbaren Teils, insbesondere eines elektrischen Fensterhebers,
wobei der Motor (M) entsprechend einer gewünschten Bewegungsrichtung einerseits mit einer Motorantriebsspannung (U_{B}) und andererseits mit einem Bezugspotential (┴) verbunden ist,
wobei ein Sensor (1 ) zur Erzeugung eines zu der Anzahl der Umdrehungen des Motors proportionalen Sensorsignals (1.S) und eine Auswerteeinheit (2) zur Zuordnung der Signalflanken des Sensorsignals (1.S) zu einer Bewegungsrichtung sowie zur Aktualisierung eines Positionszähler (4) entsprechend der einer Bewegungsrichtung zugeordneten Signalflanken vorgesehen ist, **dadurch gekennzeichnet, daß**
zum Abschalten des Motors Schaltmittel (S1,S2,S11,S12) vorgesehen sind, die den Motor von der Motorantriebsspannung trennen und über wenigstens ein einen Spannungsabfall erzeugendes elektrisches Bauelement, insbesondere eine Diode (D1,D2) oder einen Widerstand (R2,R3,R2.1,R2.2), kurzschließen,
wobei wenigstens eine Meßanordnung (3,3.1,3.2) zur Erzeugung eines zu diesem Spannungsabfall proportionalen Meßsignals (3.S) vorgesehen ist, welches zur Zuordnung der Signalflanken des Sensorsignals (1.S) zu einer Bewegungsrichtung der Auswerteeinheit zuführbar ist.

8. Schaltungsanordnung nach Anspruch 7, **dadurch gekennzeichnet, daß** jeweils zwei elektronische Schaltmittel (S11,S12 sowie S21,S22) mit einem Wicklungsanschluß des Motors verbunden sind, wobei eines (S11,S12) jeweils mit der Motorantriebsspannung (U_{B}) und das andere (S21,S22) mit dem Bezugspotential (┴) verbunden ist,
zum Antreiben des Motors in eine Bewegungsrichtung an einem Wicklungsanschluß das mit der Motorantriebsspannung (U_{B}) verbundene Schaltmittel (S12) und am anderen Wicklungsanschluß das mit dem Bezugspotential (┴) verbundene Schaltmittel (S21) geschlossen ist, während die anderen Schaltmittel (S11,S22) geöffnet sind,
die beiden auf das Bezugspotential (⊥) geschalteten Schaltmittel (S21,S22) in einem Verbindungspunkt verbunden und jeweils durch eine Diode (DI21,DI22) überbrückt sind, die jeweils in Sperrichtung auf den Verbindungspunkt geschaltet ist.

9. Schaltungsanordnung nach Anspruch 7 oder 8, **dadurch gekennzeichnet, daß** die Schaltmittel (S11,S12,S21,S22) im geschlossenen Zustand einen inhärenten Innenwiderstand (RI) aufweisen und der Spannungsabfall darüber erfaßt wird.

10. Schaltungsanordnung nach Anspruch 8 oder 9, **dadurch gekennzeichnet, daß** die Schaltmittel (S11-S22) und Dioden (DI11-DI22) ausgebildet sind als Anreicherungs-MOSFETs mit einer inhärenten Diode durch eine Source - Substratverbindung.

11. Schaltungsanordnung nach Anspruch 7, **dadurch gekennzeichnet, daß** zum Kurzschließen zwischen den beiden auf das Bezugspotential (┴) geschalteten Schaltmitteln wenigstens ein Meßwiderstand (R2,R3, R2.1,R2.2) vorgesehen ist, der in (R3) Reihe mit dem Motor (M) innerhalb der Schaltmittel (S1,S2) oder vom Motor aus parallel (R2,R2.1,R2.2) außerhalb zwischen den Schaltmitteln (S1,S2) angeordnet ist,
wobei über dem Meßwiderstand (R2,R3) oder den Meßwiderständen (R2.1,R2.2) eine Meßanordnung (3,3.1,3.2) zur Erzeugung wenigstens eines spannungsproportionalen Meßsignals (3.S) vorgesehen ist, welches zur Zuordnung der Signalflanken des Sensorsignals (1.S) zu einer Bewegungsrichtung zuführbar ist.

12. Schaltungsanordnung nach einem der vorangehenden Ansprüche 7 bis 11 , **dadurch gekennzeichnet, daß** ein weiterer Meßwiderstand (R1) zwischen Bezugspotional (⊥) und dem Verbindungspunkt geschaltet ist, wobei die Meßanordnung (3) denjenigen Spannungsabfall (U_{M1,2}) mißt und an die Auswerteeinheit (2) weitergibt, der einerseits über dem den Spannungsabfall erzeugenden elektrischen Bauelement und andererseits über dem weiteren Meßwiderstand (R1) gegen das Bezugspotential (⊥) abfällt.

13. Schaltungsanordnung nach Anspruch 11 oder 12, **dadurch gekennzeichnet, daß** die Meßwiderstände (R1,R2,R3,R2.1,R2.2) niederohmig, vorzugsweise kleiner 1 Ohm, sind.

14. Schaltungsanordnung nach Anspruch 11 bis 13, **dadurch gekennzeichnet, daß** die Meßwiderstände (R1,R2,R3) als Teil der die Schaltung verbindenden Leitbahnen ausgeführt sind.

15. Schaltungsanordnung nach einem der vorangehenden Ansprüche 7 bis 14, **dadurch gekennzeichnet, daß** die Meßanordnung (3,3.1,3.2) einen Verstärker mit einer Offset-Spannung (U_{offset}) aufweist, die derart bestimmt ist, daß ein auftretender Spannungsabfall zumindest teilweise ins Positive verschoben und von der Auswerteeinheit (2) nur das positive Signal der Meßanordnung ausgewertet wird.

## Claims

1. Method for detecting the movement, direction of movement and the position of a part which can be moved by means of an electric motor (M), in particular of an electric window lifter,
a) in which the motor (M) is driven by a polarity, corresponding to a desired direction of movement, of a motor drive voltage (U_{B}), and
b) in which signal edges of a signal (1.S), which is proportional to the number of revolutions of the motor, are associated (2) with a direction of movement of the part which is to be moved and counted (4.S) accordingly,
c) following disconnection of the motor drive voltage (U_{B}), movements of the motor (M) are detected and occurring signal edges are associated with a direction of movement, **characterised in that**
d) upon a command to switch off the motor drive voltage (U_{B}), the motor (M) is shunted and the generator current (I_{ind}) resulting from the after-running of the motor is then detected.

2. Method according to Claim 1, **characterised in that** the signal edges occurring directly after switching off the motor drive voltage (U_{B}) are associated with the previous direction of movement until the generator current (I_{ind}) falls below a predetermined threshold for the first time.

3. Method according to Claim 2, **characterised in that** the signal edges occurring after the current has fallen below the predetermined threshold for the first time with the external motor drive voltage (U_{B}) switched off.
a) are not evaluated or
b) are generally associated with the opposite direction of movement or
c) depending on the sign of the generator current (I_{ind}) then occurring, are associated with the direction of movement corresponding to this sign.

4. Method according to any one of the preceding Claims, **characterised in that,** in order to stop the motor from a prior direction of movement, the motor (M) is firstly disconnected from the motor drive voltage (U_{B}),
a) shunted by at least one electrical component (R3, R2.1, R.2.2, D121/D122) producing a voltage drop, and the generator current then flowing is detected as a voltage drop across the component (R3, R2.1, R.2.2, D121/D122) and
b) on the basis of the duration (t0 → t1) of the voltage drop (UM), the duration of the after-running in the prior direction of movement is determined, and signal edges of the sensor signal (1.S) occurring during the after-running are associated with the corresponding direction of movement.

5. Method according to Claim 4, **characterised in that,** for stopping purposes, the motor (M) is shunted by a diode (D121/D122), which is poled according to the generator voltage in the forward direction, and the generator current then flowing is detected as a voltage drop across the diode (D121/D122).

6. Method according to Claim 5, **characterised in that,** following the decay of the after-running (t1) in the prior direction of movement, a switching means (SW21) connected in parallel with the diode is closed and subsequently occurring signal edges of the sensor signal (1.S) during position determination
a) are not taken into account or
b) are generally associated with the opposite direction of movement or
c) depending on the sign of the voltage drop detectable across an internal resistor (RI) of the switching means (S21), are associated with the direction of movement corresponding to this sign.

7. Circuit arrangement for detecting the movement, direction of movement and the position of a part which can be moved by means of an electric motor (M), in particular of an electric window lifter,
wherein the motor (M) is connected on one side to a motor drive voltage (U_{B}) and on the other to a reference potential (┴) according to a desired direction of movement,
wherein a sensor (1) for generating a sensor signal (1.S) proportional to the number of revolutions of the motor and an evaluation unit (2) for associating the signal edges of the sensor signal (1.S) with a direction of movement and for updating a position counter (4) according to the signal edges associated with a direction of movement are provided, **characterised in that**
in order to switch off the motor, switching means (S1, S2, S11, S12) are provided which disconnect the motor from the motor drive voltage and shunt it by way of at least one electrical component, in particular a diode (D1, D2) or a resistor (R2, R3, R2.1, R2.2), producing a voltage drop,
wherein at least one measuring arrangement (3, 3.1, 3.2) is provided for generating a measuring signal (3.S) which is proportional to this voltage drop and which can be delivered to the evaluation unit in order to associate the signal edges of the sensor signal (1.S) with a direction of movement.

8. Circuit arrangement according to Claim 7, **characterised in that** two electronic switching means (S11, S12 and S21, S22) are in each case connected to a winding termination of the motor, wherein one (S11, S12) is in each case connected to the motor drive voltage (U_{B}) and the other (S21, S22) to the reference potential (┴),
in order to drive the motor in one direction of movement, the switching means (S12) which is connected to the motor drive voltage (U_{B}) is closed at one winding termination and the switching means (S21) which is connected to the reference potential (⊥) is closed at the other winding termination, while the other switching means (S11, S22) are open,
the two switching means (S21, S22) connected to the reference potential (⊥) are connected at a connection point and in each case bridged by a diode (D121, D122), which are in each case connected to the connection point in the nonconducting direction.

9. Circuit arrangement according to Claim 7 or 8, **characterised in that** the switching means (S11, S12, S21, S22) have an inherent internal resistor (RI) in the closed state and the voltage drop across this is detected.

10. Circuit arrangement according to Claim 8 or 9, **characterised in that** the switching means (S11-S22) and diodes (DI11-DI22) are formed as enhancement-mode MOSFETs with an inherent diode through a source - substrate connection.

11. Circuit arrangement according to Claim 7, **characterised in that** at least one measuring resistor (R2, R3, R2.1, R2.2) is provided for shunting between the two switching means connected to the reference potential (⊥), which resistor is disposed in series (R3) with the motor (M) within the switching means (S1, S2) or in parallel (R2, R2.1, R2.2) with the motor externally between the switching means (S1, S2),
wherein a measuring arrangement (3, 3.1, 3.2) is provided in addition to the measuring resistor (R2, R3) or the measuring resistors (R2.1, R2.2) to generate at least one measuring signal (3.S) which is proportional to the voltage and which can be delivered in order to associate the signal edges of the sensor signal (1.S) with a direction of movement.

12. Circuit arrangement according to any one of the preceding Claims 7 to 11, **characterised in that** a further measuring resistor (R1) is connected between reference potential (⊥) and the connection point, wherein the measuring arrangement (3) measures the voltage drop (U_{M1,2}) which drops on one side across the electrical component producing the voltage drop and on the other across the further measuring resistor (R1) relative to the reference potential (⊥) and transmits this to the evaluation unit (2).

13. Circuit arrangement according to Claim 11 or 12, **characterised in that** the measuring resistors (R1, R2, R3, R2.1, R2.2) are of low resistance, preferably less than 1 Ohm.

14. Circuit arrangement according to Claims 11 to 13, **characterised in that** the measuring resistors (R1, R2, R3) are constructed as part of the conducting tracks which connect the circuit.

15. Circuit arrangement according to any one of the preceding Claims 7 to 14, **characterised in that** the measuring arrangement (3, 3.1, 3.2) comprises an amplifier with an offset voltage (U_{offset}) which is determined such that an occurring voltage drop is shifted at least partly into the positive and only the positive signal of the measuring arrangement is evaluated by the evaluation unit (2).

## Revendications

1. Procédé pour identifier le déplacement, la direction de déplacement et la position d'une pièce déplaçable à l'aide d'un moteur électrique (M), notamment d'un lève-glace électrique,
a) dans lequel le moteur (M) est activé avec une polarité, qui correspond à une direction de déplacement désirée, d'une tension (Uₛ) d'activation du moteur, et
b) dans lequel des flancs d'un signal (1.S) proportionnel au nombre des rotations du moteur, sont associés (2) à une direction de déplacement de la pièce devant être déplacée et sont comptés (4.S) de façon correspondante,
c) après le débranchement de la tension (U_{B}) d'activation du moteur, des déplacements du moteur (M) sont détectés et des flancs, qui apparaissent, sont associés à une direction de déplacement,
**caractérisé en ce que**
d) lors d'une commande d'interruption de la tension (U_{B}) d'activation du moteur, le moteur (M) est court-circuité et le courant (I_{ind}) du générateur, qui résulte de la marche par inertie du moteur.

2. Procédé selon la revendication 1, **caractérisé en ce que** les flancs du signal, qui apparaissent directement après l'interruption d la tension (U_{B}) d'activation du moteur, sont associés à la direction de déplacement précédente, jusqu'à ce que le courant (I_{ind}) du générateur tombe pour la première fois au-dessous d'un seuil prédéterminé.

3. Procédé selon la revendication 2, **caractérisé en ce que** les flancs du signal, qui apparaissent après le premier dépassement vers le bas du seuil prédéterminé alors que la tension extérieure (U_{B}) d'activation du moteur est interrompue,
a) ne sont pas évaluées, ou
b) sont associées d'une manière générale à la direction de déplacement opposée, ou
c) sont associées, en fonction du signe du courant (I_{ind}) du générateur, qui apparaît, à la direction de déplacement correspondant à ce signe.

4. Procédé selon l'une des revendications précédentes, **caractérisé en ce que** pour arrêter le moteur à partir d'une ancienne direction de déplacement, le moteur (M) est tout d'abord séparé de la tension (U_{B}) d'activation du moteur,
a) est court-circuité par l'intermédiaire d'au moins un composant électrique (R3, R2.1, R.2.2, DI21/DI22), qui produit une chute de tension, et le courant, qui circule alors, du générateur est détecté en tant que chute de tension par l'intermédiaire du composant (R3, R2.1, R.2.2, DI21/DI22), et
b) sur la base de la durée (t0 -> t1) de la chute de tension (UM) la durée de rotation par inertie dans l'ancienne direction de déplacement est déterminée et des flancs, qui apparaissent pendant la marche par inertie, du signal (1.S) du capteur sont associés à la direction de déplacement correspondante.

5. Procédé selon la revendication 4, **caractérisé en ce que** pour l'arrêt, le moteur (M) est court-circuité au moyen d'une diode (DI21/DI22) polarisée dans le sens passant conformément à la tension du générateur, et le courant du générateur, qui circule alors, est détecté en tant que chute de tension au moyen de la diode (DI21/DI22).

6. Procédé selon la revendication 5, **caractérisé en ce qu'**après l'évanouissement de la rotation par inertie (11) dans l'ancienne direction de déplacement, un moyen de commutation (SW21) branché en parallèle avec la diode, est fermé, et des flancs, qui apparaissent ensuite, du signal (1.S) du capteur lors de la détermination de la position
a) ne sont pas pris en compte, ou
b) sont associés d'une manière générale à la direction de déplacement opposée, ou
c) sont associés, en fonction du signal de la chute de tension pouvant être détectée par l'intermédiaire de la résistance intérieure (RI) du moyen de commutation (S21), à la direction de déplacement correspondant à ce signe.

7. Montage pour identifier le déplacement, la direction de déplacement et la position d'une pièce pouvant être déplacée au moyen d'un moteur électrique (M), notamment d'un lève-glace électrique,
dans lequel le moteur (M) est relié conformément à une direction de déplacement désirée, d'une part à une tension (U_{B}) d'activation du moteur et d'autre part à un potentiel de référence (⊥),
dans lequel il est prévu un capteur (1) pour produire un signal (1.S) proportionnel au nombre de rotations du moteur, et une unité d'évaluation (2) pour associer les flancs du signal (1.S) du capteur à une direction de déplacement ainsi que pour actualiser un compteur de position (4) en fonction des flancs du signal qui sont associés à une direction de déplacement,
**caractérisé en ce que**
pour l'arrêt du moteur il est prévu des moyens de commutation (S1, S2, S11, S12), qui séparent le moteur de la tension d'activation du moteur et court-circuitent le moteur par l'intermédiaire d'au moins un composant électrique, qui produit une chute de tension, notamment une diode (D1, D2) ou une résistance (R1, R2, R2.1, R2.2),
au moins un dispositif de mesure (3.1, 3.2) étant prévu pour produire un signal de mesure (3.S) proportionnel à la chute de tension, ce signal pouvant être envoyé à l'unité de mesure pour associer les flancs du signal (1.S) du capteur à une direction de déplacement.

8. Montage selon la revendication 7, **caractérisé en ce que** respectivement deux moyens électroniques de commutation (S11, S12 ainsi que S21, S22) sont reliés à une borne d'enroulement du moteur, l'un (S11, S12) étant reliés respectivement à la tension (U_{B}) d'activation du moteur et l'autre (S21, S22) étant reliés au potentiel de référence (⊥),
pour l'activation du moteur dans une direction de déplacement, le moyen de commutation (S12) relié à la tension (U_{B}) d'activation du moteur est fermé sur une borne de l'enroulement et le moyen de commutation (S21) relié au potentiel de référence (⊥) est fermé sur l'autre borne de l'enroulement, tandis que les autres moyens de commutation (S11, S21) sont ouverts,
les deux moyens de commutation (S21, S22), qui sont placés au potentiel de référence (⊥) sont reliés à un point de liaison et sont shuntés respectivement à une diode (DI21, DI22), qui est connectée respectivement dans le sens de blocage au point de liaison.

9. Montage selon la revendication 7 ou 8, **caractérisé en ce qu'**à l'état fermé, les moyens de commutation (S11, S12, S21, S22) possèdent une résistance interne propre (RI) et que la chute de tension est détectée aux bornes de cette résistance.

10. Montage selon la revendication 8 ou 9, **caractérisé en ce que** les moyens de commutation (S11-S22) et les diodes (DI11-DI22) sont agencés sous la forme de transistors MOSFET du type à enrichissement possédant une diode propre au moyen d'une liaison source-substrat.

11. Montage selon la revendication 7, **caractérisé en ce que** pour le court-circuitage entre les deux moyens de commutation connectés au potentiel de référence (⊥), il est prévu au moins une résistance de mesure (R3, R2.1, R2.2) qui est disposée en série (R3) avec le moteur (M) à l'intérieur des moyens de commutation (S1, S2) ou à partir du moteur, en parallèle (R2, R2.1, R2.2) à l'extérieur entre les moyens de commutation (S1, S2),
un dispositif de mesure (3, 3.1, 3.2) étant prévu, au moyen de la résistance de mesure (R1, R2, R3) ou des résistances de mesure (R2.1, R2.2) pour produire au moins un signal de mesure (3.1) proportionnel à la tension et qui peut être envoyé pour l'association des flancs du signal (1.S) du capteur à une direction de déplacement.

12. Montage selon l'une des revendications précédentes 7 à 11, **caractérisé en ce qu'**une autre résistance de mesure (R1) est branchée entre le potentiel de référence (⊥) et le point de liaison, le dispositif de mesure (3) mesurant la chute de tension (U_{M1,2}), d'une part dans le composant électrique produisant la chute de tension et d'autre part dans l'autre résistance de mesure (R1) par rapport au potentiel de référence (⊥), et la transmet à l'unité d'évaluation (2).

13. Montage selon la revendication 11 ou 12, **caractérisé en ce que** les résistances de mesure (R1, R2, R3, R2.1, R2.2) possèdent une faible valeur ohmique, de préférence inférieure à 1 ohm.

14. Montage selon les revendications 11 à 13, **caractérisé en ce que** les résistances de mesure (R1, R2, R3) sont agencées en tant que partie des voies conductrices reliant le circuit.

15. Montage selon l'une des revendications précédentes 7 à 14, **caractérisé en ce que** le dispositif de mesure (3, 3.1, 3.2) comporte un amplificateur possédant une tension d'offset (U_{offset}), qui est déterminée de telle sorte qu'une chute de tension, qui apparaît, est décalée au moins en partie vers des valeurs positives et que l'unité d'évaluation (2) évalue uniquement le signal positif du dispositif de mesure.
